(19) Europäisches Patentamt
European Patent Office
Office européen des brevets

(11) Veröffentlichungsnummer: **0 210 510**
**A1**

(12) **EUROPÄISCHE PATENTANMELDUNG**

(21) Anmeldenummer: **86109581.8**

(22) Anmeldetag: **12.07.86**

(51) Int.Cl.[4]: **C 08 L 69/00**
//(C08L69/00, 51:04, 25:02, 33:12, 33:20, 31:06)

(30) Priorität: **25.07.85 DE 3526552**

(43) Veröffentlichungstag der Anmeldung:
**04.02.87 Patentblatt 87/6**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Kress, Hans-Jürgen, Dr.**
**Scheiblerstrasse 111**
**D-4150 Krefeld(DE)**

(72) Erfinder: **Eichenauer, Herbert, Dr.**
**Goethestrasse 71**
**D-4047 Dormagen(DE)**

(72) Erfinder: **Peters, Horst, Dr.**
**Winterberg 25**
**D-5090 Leverkusen 3(DE)**

(72) Erfinder: **Schoeps, Jochen, Dr.**
**Windmühlenstrasse 126**
**D-4150 Krefeld(DE)**

(72) Erfinder: **Ott, Karl-Heinz, Dr.**
**Paul-Klee-Strasse 54**
**D-5090 Leverkusen(DE)**

(54) **Thermoplastische Formmassen mit verbesserter Verarbeitbarkeit.**

(57) Gegenstand der vorliegenden Erfindung sind thermoplastische Formmassen enthaltend thermoplastische Polycarbonate, Pfropfpolymerisate und zwei verschiedene Copolymerisate und gegebenenfalls übliche Mengen an Flammschutzmitteln, Stabilisatoren, Pigmenten, Entformungsmitteln und/oder Antistatika, sowie ein Verfahren zur Herstellung dieser Formmassen.

EP 0 210 510 A1

BAYER AKTIENGESELLSCHAFT 5090 Leverkusen, Bayerwerk
Konzernverwaltung RP
Patentabteilung PS/ABC

# Thermoplastische Formmassen mit verbesserter Verarbeitbarkeit

Gegenstand der vorliegenden Erfindung sind thermoplastische Polycarbonatformmassen, enthaltend

A) 20 - 80 Gew.-Tl. eines thermoplastischen Polycarbonates,

B) 10 - 60 Gew.-Tl. eines oder mehrerer Pfropfpolymerisate aus

B.1) 5 - 90 Gew.-Tl., vorzugsweise 30 - 80 Gew.-Tl. einer Mischung aus

B.1.1) 50 - 95 Gew.-% Styrol, α-Methylstyrol, kernsubstituiertem Styrol, Methylmethacrylat oder Mischungen daraus, und

B.1.2) 50 - 5 Gew.-% (Meth)Acrylnitril, Methylmethacrylat, Maleinsäureanhydrid, N-substituiertem Maleinimid oder Mischungen daraus,

auf

B.2) 95 - 10 Gew.-Tl., vorzugsweise 70 - 20 Gew.-Tl. eines Kautschuks mit einer Glastemperatur TG $\leq$ 10° C, und

C) 10 - 70 Gew.-Tl. eines thermoplastischen Copolymerisats mit einer Grenzviskosität von 20 bis 110 ml/g, vorzugsweise von 30 bis 90 ml/g (gemessen in Dimethylformamid bei 25° C) aus

C.1) 50 - 95 Gew.-% Styrol, α-Methylstyrol, kernsubstituiertem Styrol, Methylmethacrylat oder Mischungen daraus, und

C.2) 50 - 5 Gew.-% (Meth)Acrylnitril, Methylmethacrylat, Maleinsäureanhydrid, N-substituiertem Maleinimid oder Mischungen daraus, wobei die Summe der Gewichtsteile A) + B) + C) jeweils 100 Gewichtsteile beträgt, und

D) 0,5 bis 7,5 Gew.-Tl., vorzugsweise 1 bis 5 Gew.-Teile, bezogen auf 100 Gew.-Teile A) + B) + C), eines Copolymerisats aus

D.1) 0 - 90 Gew.-% Styrol, α-Methylstyrol, kernsubstituiertem Styrol, Methylmethacrylat oder Mischungen daraus, und

D.2) 100 - 10 Gew.-% (Meth)Acrylnitril, Methylmethacrylat, Maleinsäureanhydrid, N-substituiertem Maleinimid oder Mischungen daraus, die

dadurch gekennzeichnet sind, daß die Komponente D) eine Grenzviskosität [η] von 2 bis 10 ml/g, vorzugsweise 4 bis 7 ml/g (gemessen in Dimethylformamid bei 25° C) hat und wobei die Kettenlänge des Copolymerisats D) durch $C_1$-$C_{18}$-Alkylmercaptane geregelt ist.

Die erfindungsgemäßen Mischungen aus Polycarbonaten, Pfropfpolymerisaten und Copolymerisaten können noch die in der Polycarbonat- oder Pfropfpolymerisat- oder Copolymerisatchemie üblichen Zusatzstoffe, wie Flammschutzmittel, Stabilisatoren, Pigmente, Entformungsmittel und/oder Antistatika in den üblichen Mengen enthalten.

Durch den Zusatz der Komponente D) werden Polycarbonat/ABS-Formmassen erhalten, die eine verbesserte Fließfähigkeit und somit eine verbesserte Verarbeitbarkeit haben.

Dies bedeutet, daß großformatige Spritzgußteile beziehungsweise solche mit komplizierter Struktur, z.B. Computergehäuse, Teile für die Kfz-Industrie, aufgrund der verbesserten Fließfähigkeit leichter beziehungsweise unter geringerer Temperaturbelastung hergestellt werden können.

Ein weiterer Gegenstand der Erfindung ist somit die Verwendung dieser Copolymerisate D), die eine Grenzviskosität

von 2 bis 10 ml/g, vorzugsweise 4 bis 7 ml/g besitzen, zur Herstellung von leicht fließenden Mischungen aus aromatischem Polycarbonat A), einem oder mehreren Pfropfpolymerisaten B) und Copolymerisat C).

Mischungen von Polycarbonaten mit ABS-Polymerisaten sind bekannt (siehe beispielsweise DE-OS 2 259 656 oder EP-OS 5202).

Aus der EP-OS 0 080 767 sind Mischungen aus Polycarbonaten, Copolymerisaten und zwei verschiedenen Pfropfpolymerisaten bekannt, denen gute Fließeigenschaften in Kombination mit guter Zähigkeit, Härte, Steifigkeit und gute Werte in Kugelfalltest zugesprochen werden.

Aus der EP-OS 0 104 695 sind ebenfalls Mischungen mit gutem Fließverhalten bekannt; sie bestehen aus Polycarbonaten Pfropfpolymerisaten, Copolymerisaten und Polyurethanen. Gegenüber solchen Mischungen können durch Einsatz der Komponente D), insbesondere bei der Herstellung kompolizierter Teile, bessere Fließfähigkeiten erzielt werden. Zusätzlich können bei höheren Verarbeitungstemperaturen keine unerwünschten Reaktionen, bedingt durch die Anwesenheit von Produkten die keine Polycarbonate, Pfropf- und Copolymerisate darstellen, eintreten. Weiterhin kann sich der Einsatz der Komponente D), bedingt durch den hohen Schwefelgehalt stabilisierend auf die gesamte Formmasse auswirken.

Erfindungsgemäß geeignete, thermoplastische, aromatische Polycarbonate gemäß Komponente A) sind solche auf Basis der Diphenole der Formel (I)

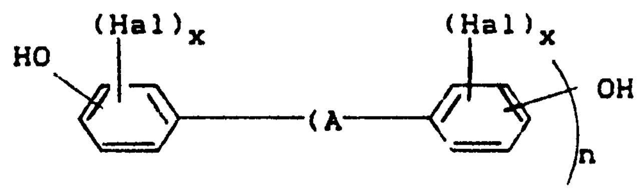

(I)

worin A eine Einfachbindung, ein $C_1$-$C_5$-Alkylen, ein $C_2$-$C_5$-Alkyliden, ein $C_5$-$C_6$-Cycloalkyliden, -S- oder $-SO_2-$, Hal, Chlor oder Brom, x 0, 1 oder 2 und "n" 1 oder 0 sind oder die Formel (Ia)

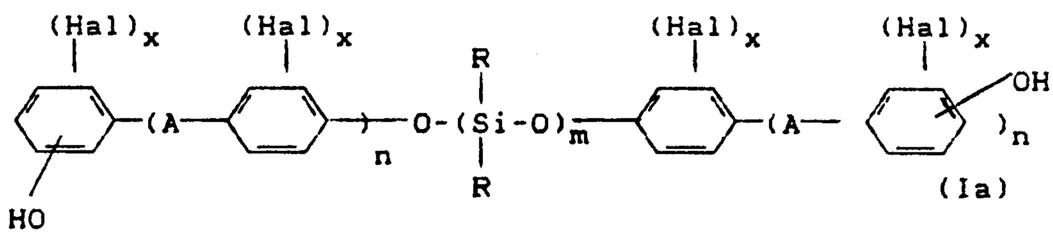

(Ia)

worin A, Hal, x und "n" die für Formel (I) genannte Bedeutung haben, und die R's gleich oder verschieden sind und ein lineares $C_1$-$C_{20}$-Alkyl, verzweigtes $C_3$-$C_{20}$-Alkyl, $C_6$-$C_{20}$-Aryl, vorzugsweise $CH_3$, sind und "m" eine ganze Zahl zwischen 5 und 100, vorzugsweise zwischen 20 und 80, ist.

Erfindungsgemäß geeignete Polycarbonate gemäß Komponente A) sind sowohl Homopolycarbonate als auch Copolycarbonate,

wobei die Diphenole der Formel (Ia) nur für die Herstellung von Copolycarbonaten mit den Diphenolen der Formel (I) eingesetzt werden, wobei der Gewichtsanteil an Diphenolen der Formel (Ia) in den Copolycarbonaten jeweils zwischen 1 und 20 Gew.-%, vorzugsweise zwischen 1,5 und 15 Gew.-% und insbesondere zwischen 2 und 10 Gew.-%, bezogen jeweils auf die Gewichtssumme der eingesetzten Diphenole der Formeln (I) und (Ia), liegt.

Die Diphenole der Formel (I) sind entweder literaturbekannt oder nach literaturbekannten Verfahren herstellbar; Polydiorganosiloxane mit Hydroxy-aryloxy-Endgruppen gemäß Formel (Ia) sind ebenfalls bekannt (siehe beispielsweise US-Patent 3 419 634) beziehungsweise nach literaturbekannten Verfahren herstellbar.

Die Herstellung der erfindungsgemäß geeigneten Polycarbonate gemäß Komponente A) ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe beispielsweise DE-OS 3 334 872).

Geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenole beziehungsweise Dialkylphenole mit insgesamt 8 bis 20 C-Atomen in den Alkylsubstituenten gemäß deutscher Patentanmeldung P 3 506 472.2 (Le A 23 654) wie 3,5-di-tert.-Butylphenol, p-iso-Octylphenol, p-tert.-Octylphenol, p-Dodecylphenol, 2-(3,5-Dimethyl-heptyl)-phenol und 4-(3,5-Dimethyl-heptyl)-phenol.

Die erfindungsgemäß geeigneten Polycarbonate gemäß Komponente A) haben mittlere Gewichtsmittelmolekulargewichte ($\bar{M}w$, gemessen beispielsweise durch Ultrazentrifugation oder Streulichtmessung) von 10 000 bis 200 000, vorzugsweise von 20 000 bis 80 000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-bis-(4-hydroxyphenyl)-cyclohexan.

Geeignete Diphenole der Formel (Ia) sind solche, in denen R Methyl, Ethyl, Propyl, n-Butyl, tert.-Butyl oder Phenyl ist.

Bevorzugte Diphenole der Formel (Ia) sind die der Formel (Ib)

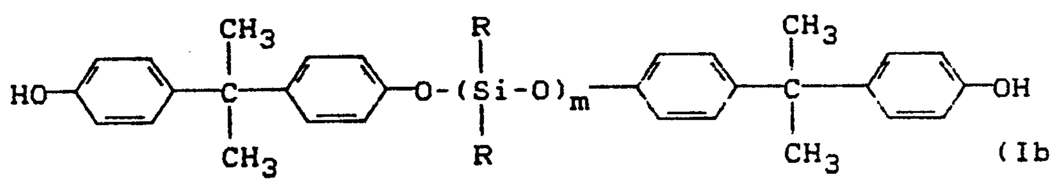

(Ib)

worin die R's gleich sind und die vorstehend genannte Bedeutung haben, also Methyl etc. oder Phenyl bedeuten und m wiederum eine ganze Zahl zwischen 5 und 100, vorzugsweise zwischen 20 und 80, ist.

Die Herstellung der Diphenole der Formel (Ia) kann beispielsweise aus den entsprechenden Bis-Chlorverbindungen (II)

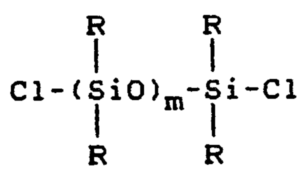

(II)

und den Diphenolen (I) beispielsweise gemäß US-Patent 3 419 634, Spalte 3 in Kombination mit US-Patent 3 189 662 erfolgen.

In den Bis-chlorverbindungen (II) haben R und m die Bedeutung wie in den Diphenolen (Ia) beziehungsweise (Ib).

Die erfindungsgemäß geeigneten Polycarbonate gemäß Komponente A) können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, beispielsweise solchen mit drei oder mehr als drei phenolischen Gruppen.

Bevorzugte Polycarboante sind neben dem Bisphenol A-Homopolycarbonat die Copolycarbonate von Bisphenol A mit bis zu 15 mol-%, bezogen auf die Molsumme an Diphenolen, an 2,2-Bis-(3,5-dibrom-4-hydroxyphenyl)-propan oder die Copolycarbonate der Diphenole der Formel (I) mit 1 bis 20 Gew.-% an Diphenolen der Formel (IIa), vorzugsweise der Formel (Ib), bezogen jeweils auf die Gewichtssumme der Diphenole (I) und (Ia), beziehungsweise (I) und (Ib).

Zur Herstellung der Pfropfpolymerisate gemäß Komponente B) geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkyl-

acrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomere enthalten. Solche Vernetzer sind z.B. Alkylendiol-di(meth)-acrylate, Polyesterdi-(meth)- acrylat, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind zum Beispiel: EPDM-Kautschuke, also Kautschuke aus Ethylen, Propylen und einem unkonjugierten Dienmonomer.

Bevorzugte Kautschuke zur Herstellung der Pfropfpolymerisate B) sind Dien- und Alkylacrylatkautschuke.

Die Kautschuke liegen im Pfropfpolymerisat B) in Form wenigstens partiell vernetzter Teilchen einer mittleren Teilchengröße von 0,09 bis 5 µm, insbesondere 0,1 bis 1 µm vor. Die Pfropfpolymerisate B) werden durch radikalische Pfropfpolymerisation der eingangs definierten Monomerengemische aus B.1.1) und B.1.2) in Gegenwart der zu pfropfenden Kautschuke B.2) hergestellt und sind durchweg bekannt.

Bevorzugte Herstellungsverfahren für die Pfropfpolymerisate B) sind Emulsions-, Lösungs-, Masse- oder Suspensionspolymerisation. Besonders bevorzugtes Pfropfpolymerisate B) sind die sogenannten ABS-Polymerisate. Als kernsubstituierte Styrole seien Halogenstyrole und p-Methylstyrol erwähnt.

Bevorzugte Copolymerisate gemäß Komponente C) sind solche aus wenigstens einem Monomeren aus der Reihe Styrol, α-Methylstyrol, Halogenstyrol, Methylmethacrylat gemäß C.1) mit wenigstens einem Monomeren aus der Reihe Acrylnitril, Methacrylnitril, Methylmethacrylat, Maleinsäureanhydrid, N-subst.-Maleinimid gemäß C.2).

Copolymerisate gemäß Komponente C) entstehen häufig bei der Pfropfpolymerisation zur Herstellung der Komponente B) als Nebenprodukte, besonders dann, wenn große Mengen Monomere auf kleine Mengen Kautschuk gepfropft werden.

Die erfindungsgemäß einzusetzende Menge an Copolymerisat C) von 10 bis 70 Gew.-Teilen, bezogen auf 100 Gew.-Teilen aus A) + B) + C), bezieht diese Nebenprodukte der Pfropfpolymerisation nicht mit ein.

Die Copolymerisate gemäß Komponente C) sind harzartig, thermoplastisch und kautschukfrei. Besonders bevorzugte Copolymerisate C) sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat.

Besonders bevorzugte Gewichtsverhältnisse im thermoplasten Copolymerisat C) sind 60 bis 80 Gew.-% C.1) und 40 bis 20 Gew.-% C.2).

Die Copolymerisate gemäß Komponente C) sind bekannt und lassen sich durch radikalische Polymerisation, insbesondere durch Emulsions-, Suspensions-, Lösungs- oder Massepolymerisation herstellen. Die Copolymerisate gemäß Komponente C) besitzen vorzugsweise Molekulargewichte $\bar{M}w$ (Gewichtsmittel, ermittelt durch Lichtstreuung oder Sedimentation) zwischen 20 000 und 200 000 bzw. Grenzviskositäten [η] zwischen 20 und 110 ml/g, gemessen in Dimethylformamid bei 25° C.

Die Herstellung der erfindungsgemäßen Copolymerisate D) kann durch Lösungs-, Suspensions- oder Emulsionspolymerisation oder durch Kombination dieser Verfahren in an sich bekannter Weise erfolgen; bevorzugt ist die Polymerisation in Emulsion.

Diese wird vorzugsweise unter Verwendung anionischer Emulgatoren wie beispielsweise Natrium-, Kalium- oder Ammoniumsalze langkettiger Fettsäuren mit 10 - 20 C-Atomen, z.B. Kaliumoleat, Alkylsulfate mit 10 - 20 C-Atomen, Alkylarylsulfonate mit 10 - 20 C-Atomen oder Alkali- bzw. Ammoniumsalze der disproportionierten Abietinsäure durchgeführt.

Die Polymerisationsreaktion kann in einem weiten Temperaturbereich durchgeführt werden; vorzugsweise erfolgt sie zwischen 30° und 100° C, besonders bevorzugt zwischen 50° C und 80° C.

Geeignete radikalbildende Initiatoren sind organische und anorganische Peroxide, anorganische Persulfate wie z.B. Kaliumpersulfat, Azoinitiatoren wie z.B. Azobisisobutyronitril sowie Redox-Systeme, die aus einem Oxidationsmittel, vorzugsweise einem Peroxid, und einem Reduktionsmittel bestehen. Als bevorzugter Initiator wird Kaliumpersulfat eingesetzt; die Einsatzmengen betragen zwischen 0,1 und 0,5 Gew.-% (bezogen auf die Monomermenge).

Die erfindungsgemäßen Copolymerisate D) besitzen eine Grenzviskosität von 2 - 10 ml/g, gemessen in DMF bei 25°C. Diese Grenzviskositäten werden erzielt durch Polymerisation eines Gemisches aus einem oder mehreren der ungesättigten Monomeren gemäß D.2) und gegebenenfalls D.1) und $C_1$-$C_{18}$-Alkylmercaptanen, wobei das als Kettenüberträger wirkende Mercaptan als endständige Thioalkylgruppe eingebaut wird.

Beispiele für einsetzbare $C_1$-$C_{18}$-Alkylmercaptane sind Ethylmercaptan, n-Propylmercaptan, n-Butylmercaptan, tert.-Butylmercaptan, n-Pentylmercaptan, n-Hexylmercaptan, n-Octylmercaptan, n-Decylmercaptan, n-Dodecylmercaptan, tert.-Dodecylmercaptan, n-Hexadecylmercaptan und n-Octadecylmercaptan.

Bevorzugte Alkylmercaptane sind tert.-Dodecylmercaptan, n-Dodecylmercaptan oder deren Gemische.

Weitere Einzelheiten über derartige schwefelhaltige Copolymerisate sind in der deutschen Patentanmeldung P 3 505 747.5 (Le A 23 559) enthalten.

Die erfindungsgemäßen Mischungen, enthaltend die Komponenten A), B), C) und D) und gegebenenfalls die üblichen Zusatzstoffe wie Flammschutzmittel, Stabilisatoren, Pigmente, Entformungsmittel und/oder Antistatika, werden hergestellt, indem man die jeweiligen Bestandteile in bekannter Weise simultan oder sukzessive bei Raumtemperatur oder bei höherer Temperatur vermischt und danach bei Temperaturen von 200° C bis 300° C in gebräuchlichen Aggregaten, wie Innenknetern, Extrudern oder Doppelwellenschnecken, schmelzcompundiert oder schmelzextrudiert.

Gegenstand der vorliegenden Erfindung ist somit auch ein Verfahren zur Herstellung von thermoplastischen Formmassen, enthaltend die Komponenten A), B), C) und D) und gegebenenfalls Flammschutzmittel, Stabilisatoren, Pigmente, Entformungsmittel und/oder Antistatika, das dadurch gekennzeichnet ist, daß man die Komponenten A), B), C), D) und gegebenenfalls Flammschutzmittel, Stabilisatoren, Pigmente, Entformungsmittel und/oder Antistatika in bekannter Weise vermischt und danach bei Temperaturen von 200° C bis 300° C in gebräuchlichen Aggregaten schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesondere können Formkörper durch Spritzguß hergestellt werden. Beispiele für herstellbare Formkörper sind Gehäuseteile jeder Art (z.B. für Haushaltsgeräte wie Saftpressen,

Kaffeemaschinen, Mixer) oder Abdeckplatten für den Bausektor, Teile für den Kfz-Sektor und Computergehäuse. Die erfindungsgemäßen Formmassen werden außerdem auf dem Gebiet der Elektrotechnik eingesetzt, weil sie sehr gute elektrische Eigenschaften haben.

Eine weitere Form der Verarbeitung der erfindungsgemäßen Formmassen ist die Herstellung von Formkörpern durch Tiefziehen aus vorher nach bekannten Verfahren hergestellten Platten oder Folien.

In dieser Anmeldung bedeutet Teilchengröße immer mittlerer Teilchendurchmesser $d_{50}$, ermittelt durch Ultrazentrifugenmessungen nach W. Scholtan et al. Kolloid-Z u.Z. Polymere 250 (1972) 782 - 796.

## Beispiele

Eingesetzte Komponenten

### Eingesetztes Polycarbonat A)

Lineares Polycarbonat auf Basis Bisphenol A mit einer Lösungsviskosität von 1,28, gemessen in $CH_2Cl_2$ bei 25° C und in einer Konzentration von 0,5 g/100 ml.

### Pfropfpolymerisat B)

SAN-Pfropfpolymerisat von 50 % Styrol/Acrylnitril-Gemisch (im Gew.-Verhältnis von 72 : 28) auf 50 % teilchenförmiges Polybutadien mit einer mittleren Teilchengröße ($d_{50}$) von 0,4 µm, erhalten durch Emulsionspolymerisation.

### Copolymerisat C)

Styrol-Acrylnitril-Copolymerisat mit einem Styrol/Acrylnitril-Verhältnis von 72:28 und einer Grenzviskosität von $[\eta]$ = 55 ml/g (Messung in Dimethylformamid bei 20° C).

### Herstellung des Copolymerisats D)

3,06 Tl. Styrol, 1,19 Tl. Acrylnitril und 0,75 Tl. tert.-Dodecylmercaptan werden unter Stickstoff zusammen mit 0,08 Tl. des Natriumsalzes der disproportionierten Abietinsäure in 68 Tl. Wasser emulgiert, wonach 0,3 Tl. Kaliumpersulfat (gelöst in 24 Tl. Wasser) zugegeben werden

und die Mischung auf 65°C erwärmt wird. Danach werden im Laufe von 4 Std. eine Mischung aus 58,14 Tl. Styrol, 22,61 Tl. Acrylnitril und 14,25 Tl. tert.-Dodecylmercaptan sowie eine Lösung von 1,92 Tl. des Natriumsalzes des disproportionierten Abietinsäure in 25 Tl. Wasser zudosiert, wobei die Reaktionstemperatur von 65°C beibehalten wird. Nach einer Nachreaktionszeit wird der Latex in einer kalten Magnesiumsulfat/Essigsäure-Lösung koaguliert. Das nach Trocknung bei 70°C im Vakuum in einer Ausbeute von 97 % erhaltene Polymerisat besitzt einen Schwefelgehalt von 2,3 % und eine Grenzviskosität von 6,7 ml/g (in Dimethylformamid bei 25°C).

Die Compoundierung der Komponenten A), B), C) und D) erfolgte auf einem 1,3-l-Innenkneter bei Temperaturen zwischen 200 und 220°C.

Die Herstellung der Formkörper erfolgte auf einer Spritzgießmaschine bei 260°C.

Die Bestimmung der Wärmeformbeständigkeit nach Vicat erfolgte gemäß DIN 53 460.

Die Bestimmung der Kerbschlagzähigkeit nach Izod erfolgte an Stäben der Abmessung 2,5 x 1/2 x 1/8" gemäß ASTM-D-256 für Raumtemperatur und -20°C.

Die Beurteilung der Verarbeitbarkeit (Fließfähigkeit) erfolgte über den bei der verwendeten Spritzgußmaschine (Massetemperatur 260° C) notwendigen Fülldruck (s.: Johannaber, Kunststoffe 74 (1984), 1, Seite 1 - 5) zur Herstellung von Stäben der Abmessung 2,5 x 1/2 x 1/8".

Die folgende Tabelle zeigt die durchgeführten Versuche sowie die erhaltenen Prüfdaten.

Gegenüber dem Vergleichsversuch besitzen die erfindungsgemäßen Einstellungen einen deutlich niedrigen Fülldruck als der Vergleichsversuch. Gleichzeitig bleiben das Zähigkeitniveau sowie die Wärmeformbeständigkeit in einem ausgezeichneten, für entsprechende PC/ABS-Mischungen üblichen Niveau.

| | A Gew.-Tl. | B Gew.-Tl. | C Gew.-Tl. | D Gew.-Tl. | Kerbschlagzähigkeit RT J/m | - 20° C J/m | Vicat B 120 °C | Fülldruck (260° C) bar |
|---|---|---|---|---|---|---|---|---|
| erfindungsgemäße Versuche | 60 | 24 | 16 | 2 | 515 | 431 | 117 | 123 |
| | 60 | 24 | 16 | 5 | 469 | 390 | 113 | 97 |
| | 60 | 24 | 11 | 5 | 511 | 445 | 115 | 114 |
| Vergleichsversuch | 60 | 24 | 16 | - | 532 | 453 | 119 | 143 |

0210510

## Patentansprüche

1. Thermoplastische Formmassen, enthaltend

A) 20 - 80 Gew.-Tl. eines thermoplastischen Polycarbonats,

B) 10 - 60 Gew.-Tl. eines oder mehrerer Pfropfpolymerisate aus

B.1) 5 - 90 Gew.-Tl. einer Mischung aus

B.1.1) 50 - 95 Gew.-% Styrol, α-Methylstyrol, kernsubstituiertem Styrol, Methylmethacrylat oder Mischungen daraus, und

B.1.2) 50 - 5 Gew.-% (Meth)Acrylnitril, Methylmethacrylat, Maleinsäureanhydrid, N-substituiertem Maleinimid oder Mischungen daraus, auf

B.2) 95 - 10 Gew.-Tl. eines Kautschuks mit einer Glastemperatur $T_G \leq 10^0 C$ und

C) 10 - 70 Gew.-Tl. eines thermoplastischen Copolymerisats mit einer Grenzviskosität von 20 bis 110 ml/g (gemessen in Dimethylformamid bei 25° C) aus

C.1) 50 - 95 Gew.-% Styrol, α- Methylstyrol, kernsubstituiertem Styrol, Methylmethacrylat oder Mischungen daraus, und

C.2) 50 - 5 Gew.-% (Meth)Acrylnitril, Methylmethacrylat, Maleinsäureanhydrid, N-substituiertes Maleinimid oder Mischungen daraus, wobei die Summe der Gewichtsteile A) + B) + C) jeweils 100 Gew.-Tle beträgt, und

D) 0,5 bis 7,5 Gew.-Tl., bezogen auf 100 Gewichtsteile A) + B) + C), eines Copolymerisats aus

D.1) 0 - 90 Gew.-% Styrol, α-Methylstyrol, kernsubstituiertem Styrol, Methylmethacrylat oder Mischungen daraus und

D.2) 100 - 10 Gew.-% (Meth)Acrylnitril, Methylmethacrylat, Maleinsäureanhydrid, N-subst. Maleinimid oder Mischungen daraus,

dadurch gekennzeichnet, daß die Komponente D) eine Grenzviskosität von 2 bis 10 ml/g (gemessen in Dimethylformamid bei 25°C) hat und die Kettenlänge des Copolymerisats D) durch $C_1$-$C_{18}$-Alkylmercaptane geregelt ist.

2. Formmassen nach Anspruch 1, dadurch gekennzeichnet, daß die Komponente D) in Mengen von 1 bis 5 Gew.-Tl. enthalten ist.

3. Formmassen gemäß Ansprüche 1 und 2, dadurch gekennzeichnet, daß die Komponente D) eine Grenzviskosität von 4 bis 7 ml/g hat.

4. Verwendung des Copolymerisats D gemäß Anspruch 1 zur Herstellung von leicht fließenden Mischungen aus aromatischen Polycarbonat, einem oder mehreren Pfropfpolymerisaten und einem thermoplastischen Copolymerisat mit einer Grenzviskosität von 20 bis 110 ml/g.

5. Formmassen gemäß Ansprüche 1 bis 3, dadurch gekennzeichnet, daß sie zusätzlich mindestens einen Zusatz, ausgewählt aus der Gruppe der Flammschutzmittel, Stabilisatoren, Pigmente, Entformungsmittel und Antistatika, enthalten.

6. Verfahren zur Herstellung der Formmassen der Ansprüche 1 bis 3, dadurch gekennzeichnet, daß man die Komponenten A), B), C) und D) in bekannter Weise vermischt und danach bei Temperaturen von 200° C bis 300° C in gebräuchlichen Aggregaten schmelzcompoundiert oder schmelzextrudiert.

7. Verfahren gemäß Anspruch 6 zur Herstellung der Formmassen des Anspruchs 5, dadurch gekennzeichnet, daß man mindestens einen Zusatz, ausgewählt aus der Gruppe der Flammschutzmittel, Stabilisatoren, Pigmente, Entformungsmittel und Antistatika einbezieht.

0210510

Europäisches Patentamt

Nummer der Anmeldung

# EUROPÄISCHER RECHERCHENBERICHT

EP 86 10 9581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | FR-A-2 383 992 (BAYER) * Ansprüche 1-7 * --- | 1-6 | C 08 L 69/00 // (C 08 L 69/00 C 08 L 51:04 C 08 L 25:02 C 08 L 33:12 C 08 L 33:20 C 08 L 31:06 ) |
| A | DE-A-3 332 325 (BASF) * Ansprüche 1-4; Zusammenfassung * --- | 1-6 | |
| D,A | EP-A-0 080 767 (STAMICARBON) * Ansprüche 1-6; Seite 4, Zeilen 1-28 * --- | 1-6 | |
| A | EP-A-0 062 838 (BASF) * Ansprüche 1,2 * --- | 1-6 | |
| A | CHEMICAL ABSTRACTS, Band 81, Nr. 4, 29. Juli 1974, Seite 43, Zusammenfassung Nr. 14305n, Columbus, Ohio, US; & JP-A-74 00 353 (TEIJIN CHEMICALS LTD. et al.) 05-01-1974 * Insgesamt * ----- | 1-6 | RECHERCHIERTE SACHGEBIETE (Int. Cl.4) C 08 L |

Der vorliegende Recherchenbericht wurde für alle Patentansprüche erstellt

| Recherchenort | Abschlußdatum der Recherche | Prüfer |
|---|---|---|
| DEN HAAG | 05-11-1986 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82